# EUROPÄISCHE PATENTSCHRIFT

(11) **EP 1 422 096 B1**
(45) Veröffentlichungstag und Bekanntmachung des Hinweises auf die Patenterteilung: **31.01.2007**
(21) Anmeldenummer: 03026484.0
(22) Anmeldetag: 20.11.2003
(51) Int. Cl.: B60J 7/043, B60J 7/19

(54) **Fahrzeugdach mit Verriegelungsanordnung**
Vehicle roof with locking mechanism
Toit de vehicule avec dispositif de verrouillage

(30) Priorität: 22.11.2002 DE 10254774
(43) Veröffentlichungstag der Anmeldung: 26.05.2004
(73) Patentinhaber: Webasto AG, 82131 Stockdorf (DE)
(72) Erfinder: Färber, Manfred, 82407 Wielenbach (DE)

(56) Entgegenhaltungen:
- EP-A- 1 095 807
- JP-A- 62 286 830
- US-A- 4 995 667
- US-A- 5 791 728

## Beschreibung

Die vorliegende Erfindung betrifft ein Fahrzeugdach mit mindestens einem Deckel, der in seiner Schließstellung eine Dachöffnung in einer festen Dachfläche verschließt und der zum mindestens teilweisen Freigeben der Dachöffnung aus der Dachöffnung anhebbar ist, wobei eine Verriegelungsanordnung vorgesehen ist, um ein Anheben des Deckels in der Schließstellung zu verhindern, wobei die Verriegelungsanordnung eine Mehrzahl von Riegelelementen aufweist, die zwischen einer Verriegelungsstellung und einer Freigabestellung verlagerbar sind und die mit deckelfesten Eingriffselementen derart zusammenwirken, dass die Riegelelemente die Eingriffselemente in der Verriegelungsstellung mindestens teilweise hintergreifen und in der Freigabestellung freigeben.

Ein Dach der eingangs genannten Art ist aus DE 42 29 867 bekannt, die ein mit einem T-Dach ausgestattetes Fahrzeug beschreibt, bei welchem zwischen einem vorderen und einem hinteren Bereich der festen Dachfläche eine Dachöffnung vorgesehen ist, die sich über die gesamte Breite der Dachfläche erstreckt, wobei in einem in Fahrzeugquerrichtung mittleren Bereich ein in Fahrzeuglängsrichtung verlaufender Mittelholm vorgesehen ist, der den vorderen und den hinteren Bereich der festen Dachfläche verbindet, wobei der Deckel zum Verschließen der Dachöffnung noch oben ausstellbar und nach hinten über den hinteren Bereich der festen Dachfläche verfahrbar ist. Da bei einem derartigen Dach der die obere Anschlagsfläche für die unterhalb des Deckels angeordneten Seitenscheiben bereitstellende Querholm Teil des Deckels ist, muss beim Schließen der Seitenfenster verhindert werden, dass der Deckel durch die nach oben gerichtete Bewegung der Seitenscheibe angehoben wird. Zu diesem Zweck, sowie um eine Bewegung des Deckels aufgrund der im Fahrbetrieb entstehenden Luftströme zu verhindern, ist gemäß der DE 42 29 867 eine Verriegelungsanordnung vorgesehen, die über benachbart den Ecken des Deckels angeordnete Riegelelemente sowie deckelseitig angeordnete Eingriffselemente verfügt. Um in der Schließstellung des Deckels die Riegelelemente in Eingriff mit den Eingriffselementen zu bringen, sind die Riegelelemente auf sich über die Deckelbreite erstreckenden Antriebsstangen angebracht, die wiederum über ein entlang des Mittelholms angeordnetes Antriebsgestänge angetrieben werden. Die in dem in DE 42 29 867 vorgeschlagenen Fahrzeugdach vorgesehene Verriegelungsanordnung ist in so fern nachteilig als zwischen den in den Ecken des Deckels angeordneten Riegelelementen und deren im Bereich des Mittelholms angeordneten Antriebsgestänges sehr lange Hebelwege auftreten, mit welchen sich einerseits ein sicheres Verriegeln von beiden auf einer Querstange angeordneten Riegelelementen nicht gewährleisten lässt und andererseits zum Erbringen einer ausreichend hohen Schließkraft das Antriebsgestänge entsprechend massiv ausgelegt sein muss, was sich nachteilig beim Gewicht der Deckelmechanik niederschlägt.

Es ist daher Aufgabe der vorliegenden Erfindung, ein Fahrzeugdach der eingangs genannten Art zu schaffen, bei welchem ein sicheres Ineingriffbringen der dachseitigen Riegelelemente mit den deckelseitigen Eingriffselementen gewährleistet werden kann, und das dennoch ohne ein Antriebsgestänge, wie es aus dem Stand der Technik bekannt ist, auskommt.

Diese Aufgabe wird gemäß der vorliegenden Erfindung bei einem Fahrzeugdach der eingangs genannten Art dadurch gelöst, dass die Riegelelemente in dachfesten Führungsschienen verschiebbar geführt sind und zum Verfahren der Riegelelemente ein Antrieb vorgesehen ist, der über mindestens ein zug- und drucksteifes Antriebskabel mit den Riegelelementen gekoppelt ist. Bei einer solchen Ausgestaltung des Fahrzeugdaches, bei der die Ansteuerung der Riegelelemente mittels Antriebskabeln erfolgt, können einerseits die einzelnen Riegelelemente individuell gefertigt und platziert werden, woraus sich eine sehr große Designfreiheit ergibt, und ist andererseits keine aufwändige Verstellmechanik erforderlich.

Weitere Ausgestaltungen der Erfindung ergeben sich aus den Unteransprüchen.

Obschon das mit verriegelbare Fahrzeugdach nach der vorliegenden Erfindung grundsätzlich bei allen Dacharten eingesetzt werden kann, erweisen sich dessen Vorzüge von besonderem Nutzen, wenn das Fahrzeugdach als T-Dach ausgebildet ist, bei welchem sich die Dachöffnung zwischen einem vorderen und einem hinteren Bereich der festen Dachfläche über die gesamte Breite der Dachfläche erstreckt, wobei in einem in Fahrzeugquerrichtung mittleren Bereich ein in Fahrzeuglängsrichtung verlaufender Mittelholm vorgesehen ist, der den vorderen und den hinteren Bereich der festen Dachfläche verbindet. Da bei derartigen Dächern die seitlichen Deckelränder die oberen Anschlagsfläche für die Seitenscheiben bilden, muss beim Schließen der Seitenfenster verhindert werden, dass der Deckel durch die von den Seitenfenstern ausgeübte Schließkraft angehoben wird, was bei dem erfindungsgemäßen Dach gewährleistet ist.

Handelt es sich bei dem Fahrzeugdach um ein T-Dach, so ist die Mechanik zum Verstellen des Deckels vorzugsweise im Bereich des Mittelholms untergebracht. Ebenso ist auch der Antrieb zum Verfahren der Riegelelemente vorzugsweise im Bereich des Mittelholms angeordnet.

Um den Deckel in seiner Schließstellung formschlüssig in der Dachöffnung zu fixieren, weist die Verriegelungsanordnung vorzugsweise vier Riegelelemente auf, von denen zwei in einem dachfesten Rahmenteil benachbart der Vorderkante der Dachöffnung und zwei in einem dachfesten Rahmenteil benachbart der Hinterkante der Dachöffnung angeordnet sind. Bei einer bevorzugten Ausgestaltung eines solchen Fahrzeugdaches sind die auf einer Seite des Mittelholms angeordneten Riegelelemente über ein gemeinsames Antriebskabel mit dem Antrieb, vorzugsweise einem Elektromotor, gekoppelt. Auf diese Weise wird einerseits der Aufbau der Dachmechanik vereinfacht und andererseits die Ansteuerung der Riegelelemente synchronisiert. Bei einer Verriegelungsanordnung mit vier Riegelelementen kann hierbei eine Abtriebswelle des Antriebs so zwischen den beiden Antriebskabeln zur für die beiden linken bzw. der beiden rechten Riegelelemente angeordnet werden, dass ohne Zwischenschaltung weiterer Antriebselemente durch eine Drehung der Abtriebswelle beide Antriebskabel du damit alle vie Riegelelemente synchron betätigt werden.

Bei einem solchen Dach ergibt sich eine bevorzugte Kabelführung der Antriebskabel, wenn die Führungen für die Riegelelemente in Fahrzeugquerrichtung angeordnet sind. Sollen hierbei über ein Antriebskabel zwei Riegelelemente angetrieben werden, insbesondere ein Riegelelement, das in einem dachfesten Rahmenteil benachbart der Vorderkante der Dachöffnung angeordnet ist, und ein zweites ,das in einem dachfesten Rahmenteil benachbart der Hinterkante angeordnet ist, so lässt sich eine möglichst knickfreie Kabelführung dadurch bewerkstelligen, dass das vorderer und das hintere Riegelelement seitenverkehrt zueinander angeordnet sind.

Um nicht nur ein Ausscheren des Deckels nach oben in seiner Schließstellung zu verhindern, sondern zusätzlich den Deckel insbesondere durch Anlage gegen eine elastische Dichtfläche fixieren zu können, sind die Riegelelemente und/oder die Eingriffselemente vorzugsweise so ausgebildet, dass bei einem Eingriff der Riegelelemente und der Eingriffselemente eine nach unten gerichtete Kraftkomponente auf den Deckel ausgeübt wird. Dies lässt sich in besonders einfacher Weise dadurch realisieren, dass die Riegelelemente und/oder die Eingriffselemente eine mit Bezug auf die Bewegungsrichtung der Riegelelemente geneigte Eingriffsfläche aufweisen.

Bevorzugte Ausführungsbeispiele der Erfindung werden im folgenden unter Bezugnahme auf die beiliegenden Zeichnungen im Detail beschrieben. Es zeigen:
- FIG. 1: einen schematische perspektivische Ansicht einer Fahrzeugs mit einem Fahrzeugdach gemäß der vorliegenden Erfindung;
- FIG. 2: einen perspektivische Aufsicht auf die Mechanik zum Verstellen und Verriegeln des Deckels eines erfindungsgemäßen Fahrzeugdaches in der Deckelverriegelungsstellung;
- FIG. 3: eine Ansicht ähnlich FIG. 2 in der Deckelfreigabestellung;
- FIG. 4: ein Riegelelement und ein damit zusammenwirkendes Eingriffselement in der Verriegelungsstellung; und
- Fig. 5: das Riegelelement und das damit zusammenwirkende Eingriffselement aus Fig. 4 in der Freigabestellung.

Die im folgenden verwendeten Begriffe "vorne" und "hinten" sowie "links" und "rechts" beziehen sich auf die normale Fahrtrichtung des Fahrzeugs.

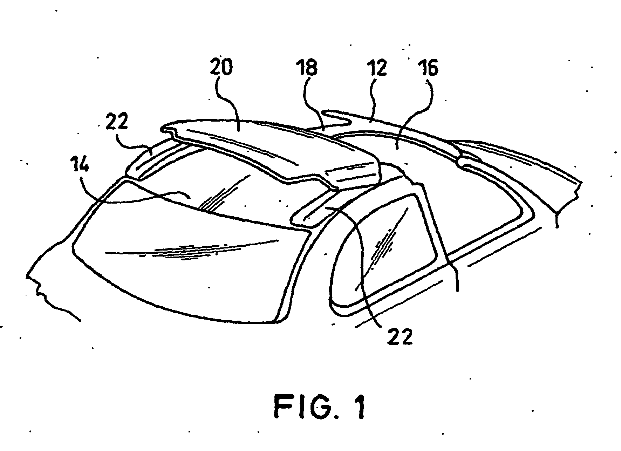

Das in FIG. 1 schematisch dargestellte Fahrzeug ist mit einem sogenannten T-Dach ausgestattet, das heißt mit einem Dach, bei welchem zwischen einem vorderen Bereich 12 und einem hinteren Bereich 14 der festen Dachfläche eine Dachöffnung 16 vorgesehen ist, die sich über die gesamte Breite der Dachfläche erstreckt, und nur durch einen sich in Fahrzeuglängsrichtung verlaufenden Mittelholm 18 unterbrochen wird, der den vorderen Bereich 12 der festen Dachfläche mit dessen hinterem Bereich 14 verbindet. Zum Schließen der Dachöffnung 16 ist ein Deckel 20 vorgesehen, der zum Freigeben der Dachöffnung angehoben und nach hinten entlang dachfesten Führungen 22 über die feste Dachfläche verfahren werden kann.

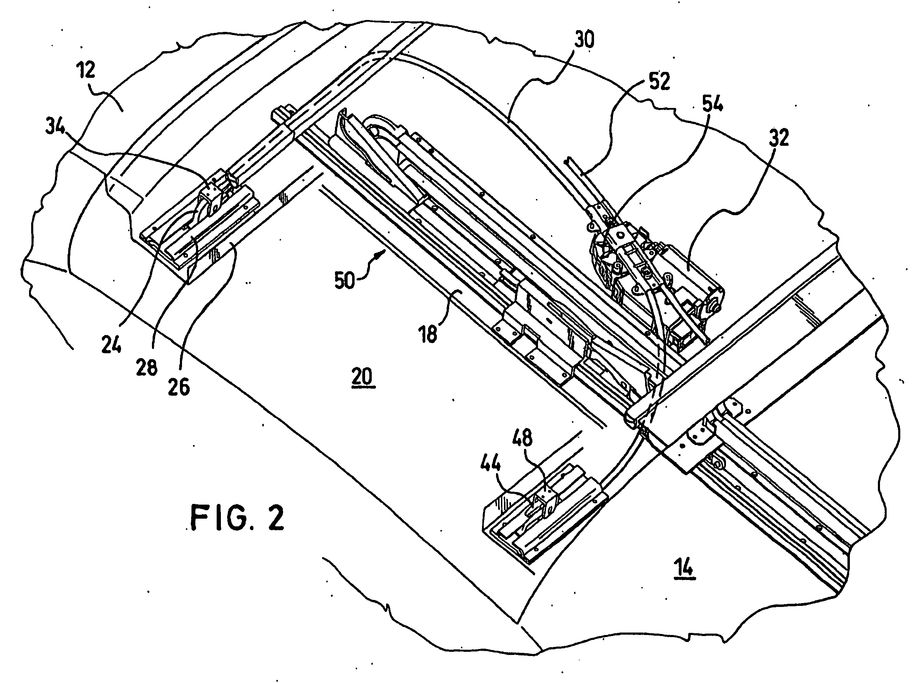

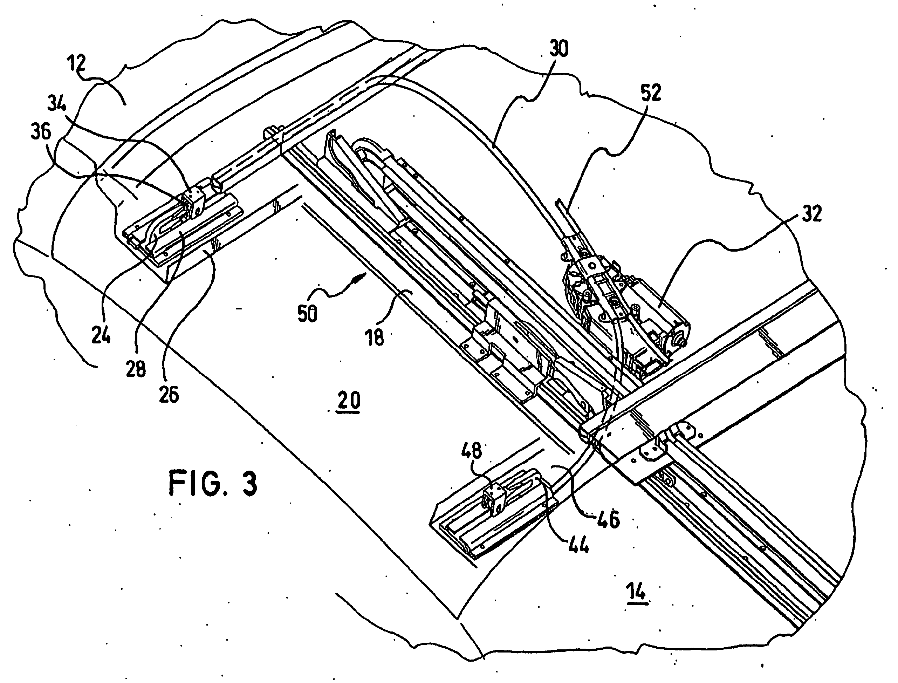

Bezugnehmend auf FIG. 2 weist eine Verriegelungsanordnung zum formschlüssigen Fixieren des Deckels in seiner Schließstellung vier Riegelelemente auf, von denen in den FIGN. 2 und 3 diejenigen zwei gezeigt sind, die im Bereich des in Fahrzeugrichtung linken Deckelrandes vorgesehen sind. Insbesondere ist in einem vorderen Dachrahmen 26 ein erstes Riegelelement 24 vorgesehen, das in einer in dem vorderen Dachrahmen 26 angeordneten Führungsschiene 28 in Fahrzeugquerrichtung verschiebbar geführt ist.

Wie sich insbesondere aus einem Vergleich der FIGN. 2 und 3 ergibt, wirkt das Riegelelement 24 mit einem Eingriffselement 34 zusammen, das an der Unterseite des Deckels 20 angebracht ist. Während in der in FIG. 3 dargestellten Deckelfreigabestellung das Riegelelement 24 soweit nach links verlagert ist, dass es sich außer Eingriff mit dem Eingriffselement 34 befindet, wird zum Verriegeln. des Deckels 20 das Riegelelement 24 in der Führungsschiene 28 nach rechts verlagert, so dass es mit dem Eingriffselement 34 in Eingriff tritt.

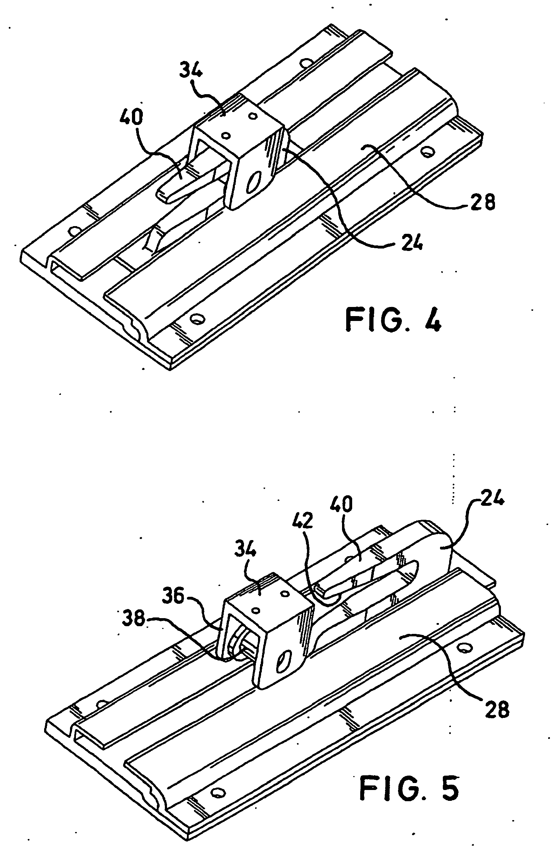

Wie insbesondere in FIG. 5 im Detail gezeigt ist, handelt es sich bei dem Riegelelement 24 um als hakenförmiges Bauteil, während das Eingriffselement 34 im wesentlichen als eine U-förmige Halterung 36 ausgebildet ist, die einen Querholm 38 trägt. Bei einem Eingriff zwischen Riegelelement 24 und Eingriffselement 34 wird das Riegelelement 24 so mit Bezug auf das Eingriffselement 34 verlagert, dass das freie Ende 40 des Riegelelements 24 in das Eingriffselement 34 einfährt und den Querholm 38 übergreift. Um ein Einfädeln des freien Endes 40 des Riegelelements 24 in das Eingriffselement 34 zu erleichtern, kann wie gezeigt das freie Ende 40 des Riegelelements 24 in Querrichtung verjüngt ausgebildet sein. Um ferner beim Verriegeln des Deckels 20 eine nach unten gerichtete Kraft auf den Deckel auszuüben, ist die Eingriffsfläche 42 des Riegelelements 24 vorzugsweise geneigt, bzw. ist das freie Ende 40 des Riegelelements 24 auch in senkrechter Richtung verjüngt. Soll die Reibung zwischen dem freien Ende 40 des Riegelelements 24 und dem Querholm 38 des Eingriffselements 34 beim Verriegeln des Deckels vermindert werden, so kann der Querholm 38 in der U-förmigen Halterung 36 drehbar gelagert werden.

Unter erneuter Bezugnahme auf die FIGN. 2 und 3 wird erfolgt die Ansteuerung des Riegelelements 24 über ein Antriebskabel 30, das mit einem Antriebsmotor 32 gekoppelt ist, der seinerseits im Bereich des Mittelholms 18 angeordnet ist, in dem ferner die nicht näher erläuterte Mechanik 50 zum Ausstellen und Verfahren des Deckels 20 untergebracht ist. Wie aus den FIGN. 2 und 3 ersichtlich ist, dient hierbei das Antriebskabel 30 nicht nur der Ansteuerung des ersten Riegelelements 24 sondern gleichzeitig auch der Ansteuerung eines zweiten Riegelelements 44, das ebenso wie das erste Riegelelement 24 nahe dem linken Seitenrand des Deckels 20 jedoch hinter der Dachöffnung 16 in einem hinteren Dachrahmen 46 angeordnet ist. Zum Entriegeln des Deckels 20 wird der Antriebsmotor 32 so angesteuert, dass er das Antriebskabel 30 nach vorne bewegt, wodurch das erste Riegelelement 24 nach links und gleichzeitig das zweite Riegelelement 44 nach rechts bewegt werden bis sie die jeweils zugeordneten Eingriffselemente 34 bzw. 48 freigeben. Um den Deckel 20 in seiner Schließstellung formschlüssig mit der vorderen und der hinteren festen Dachfläche 12 bzw. 14 zu fixieren, wird der Antriebsmotor 32 in der anderen Drehrichtung angesteuert, so dass das Antriebskabel 30 nach hinten und somit das erste Riegelelement 24 nach rechts und gleichzeitig das zweite Riegelelement 44 nach links bewegt werden. Während in den FIGN. 2 und 3 nur der linke Teil des Deckels 20 gezeigt ist, versteht sich, dass die Verriegelungsanordnung für die rechte Deckelhälfte analog aufgebaut ist und insbesondere ebenso ein vorderes und ein hinteres Riegelelement aufweist, die entsprechend der Betätigung der linken Riegelelement 24 und 44 durch ein weiteres Antriebskabel 52 betätigt werden.

Bei der in den FIGN. 2 und 3 gezeigten Ausgestaltung des Fahrzeugdaches, bei welcher der im Bereich des Mittelholms 18 untergebrachte Antriebsmotor 32 so angeordnet ist, dass dessen Abtriebswelle, die gemäß den FIGN. 2 und 3 Teil eines Schneckengetriebes 54 sein kann, zwischen den Antriebskabel 30 und 52 angeordnet ist, so dass bei einer Betätigung des Antriebsmotors 32 die Antriebskabel 30 und 52 gegenläufig vor- bzw. zurückbewegt werden.

Aus der vorstehenden Beschreibung ist ersichtlich, dass die einzelnen Riegelelemente sowie die zugehörigen Eingriffselemente alle baugleich ausgeführt werden können, es somit keine linken bzw. rechten Teile gibt, was die Herstellung und Montage einfacher und damit kostengünstiger macht.

### Bezugszeichenliste

- 12: vorderer Bereich der festen Dachfläche
- 14: hinterer Bereich der festen Dachfläche
- 16: Dachöffnung
- 18: Mittelholm
- 20: Deckel
- 22: Deckelführungen
- 24: Riegelelement
- 26: vorderer Dachrahmen
- 28: Führungsschiene
- 30: Antriebskabel
- 32: Antriebsmotor
- 34: Eingriffselemente
- 36: U-förmige Halterung
- 38: Querholm
- 40: freies Ende von 24
- 42: Eingriffsfläche
- 44: Riegelelement
- 46: hinteren Dachrahmen
- 48: Eingriffselement
- 50: Deckelmechanik
- 52: Antriebskabel
- 54: Schneckengetriebe

## Patentansprüche

1. Fahrzeugdach mit mindestens einem Deckel (20), der in seiner Schließstellung eine Dachöffnung (16) in einer festen Dachfläche (12, 14) verschließt und der zum mindestens teilweisen Freigeben der Dachöffnung aus der Dachöffnung anhebbar ist, wobei eine Verriegelungsanordnung vorgesehen ist, um ein Anheben des Deckels in der Schließstellung zu verhindern, wobei die Verriegelungsanordnung eine Mehrzahl von Riegelelementen (24, 44) aufweist, die zwischen einer Verriegelungsstellung und einer Freigabestellung verlagerbar sind und die mit deckelfesten Eingriffselementen (34, 48) derart zusammenwirken, dass die Riegelelemente die Eingriffselemente in der Verriegelungsstellung mindestens teilweise hintergreifen und in der Freigabestellung freigeben, wobei die Riegelelemente (24, 44) in dachfesten Führungsschienen (28) verschiebbar geführt sind, zum Verfahren der Riegelelemente ein Antrieb (32) vorgesehen ist, der über mindestens ein zug- und drucksteifes Antriebskabel (30, 52) mit den Riegelelementen gekoppelt ist, wobei das Fahrzeugdach als T-Dach ausgebildet ist, bei welchem sich die Dachöffnung (16) zwischen einem vorderen (12) und einem hinteren (14) Bereich der festen Dachfläche über die gesamte Breite der Dachfläche erstreckt, und wobei in einem in Fahrzeugquerrichtung mittleren Bereich ein in Fahrzeuglängsrichtung verlaufender Mittelholm (18) vorgesehen ist, der den vorderen und den hinteren Bereich der festen Dachfläche verbindet, **dadurch gekennzeichnet, dass** der Antrieb (32) zum Verfahren der Riegelelemente (24, 44) im Bereich des Mittelholms (18) angeordnet ist und dass die Führungsschienen (28) für die Riegelelemente (24, 44) in Fahrzeugquerrichtung angeordnet sind.

2. Fahrzeugdach nach Anspruch 1, **dadurch gekennzeichnet, dass** im Bereich des Mittelholms (18) eine Mechanik (50) zum Verstellen des Deckels vorgesehen ist.

3. Fahrzeugdach nach einem der Ansprüche 1 bis 2, **dadurch gekennzeichnet, dass** die Verriegelungsanordnung vier Riegelelemente (24, 44) aufweist, von denen zwei in einem dachfesten Rahmenteil (26) benachbart der Vorderkante der Dachöffnung (16) und zwei in einem dachfesten Rahmenteil (46) benachbart der Hinterkante der Dachöffnung angeordnet sind.

4. Fahrzeugdach nach Anspruch 3, **dadurch gekennzeichnet, dass** die auf einer Seite des Mittelholms (18) angeordneten Riegelelemente (24, 44) über ein gemeinsames Antriebskabel (30, 52) mit dem Antrieb (32) gekoppelt sind.

5. Fahrzeugdach nach Anspruch 3 oder 4, **dadurch gekennzeichnet, dass** die Riegelelemente (24, 44) nahe den Seitenrändem der Dachfläche angeordnet sind.

6. Fahrzeugdach nach einem der vorhergehenden Ansprüche, **dadurch gekennzeichnet, dass** der Deckel (20) nach hinten über die feste Dachfläche (14) verschiebbar ist.

7. Fahrzeugdach nach einem der vorhergehenden Ansprüche, **dadurch gekennzeichnet, dass** der Antrieb einen Elektromotor (32) aufweist.

8. Fahrzeugdach nach einem der vorhergehenden Ansprüche, **dadurch gekennzeichnet, dass** die Riegelelemente (24, 44) und/oder die Eingriffselemente (34, 48) so ausgebildet sind, dass bei einem Eingriff der Riegelelemente und der Eingriffselemente eine nach unten gerichtete Kraftkomponente auf den Deckel (20) ausgeübt wird.

9. Fahrzeugdach nach Anspruch 8, **dadurch gekennzeichnet, dass** die Riegelelemente (24, 44) und/oder die Eingriffselemente (34, 48) eine mit Bezug auf die Bewegungsrichtung der Riegelelemente geneigte Eingriffsfläche aufweisen.

## Claims

1. Vehicle roof having at least one panel (20) which, in its closed position, closes a roof opening (16) in a fixed roof area (12, 14), and which can be raised out of the roof opening in order to expose the roof opening, at least partly, a locking arrangement being provided in order to prevent the panel being raised when in the closed position, the locking arrangement having a plurality of locking elements (24, 44), which can be displaced between a locked position and a released position and which interact with engagement elements (34, 48) fixed to the panel in such a way that the locking elements engage behind the engaging elements, at least to some extent, when in the locked position and release them when in the released position, the locking elements (24, 44) being guided such that they can be displaced in guide rails (28) fixed to the roof, in order to move the locking elements, a drive (32) being provided, which is coupled to the locking elements via at least one drive cable (30, 52) which is rigid in tension and compression, the vehicle roof being constructed as a T-shaped roof, in which the roof opening (16) extends over the entire width of the roof area between a front (12) and a rear (14) region of the fixed roof area, and a central member (18) running in the vehicle longitudinal direction, which joins the front and the rear region of the fixed roof area, being provided in a central region in the vehicle transverse direction, **characterized in that** the drive (32) for moving the locking elements (24, 44) is arranged in the region of the central member (18), and **in that** the guide rails (28) for the locking elements (24, 44) are arranged in the vehicle transverse direction.

2. Vehicle roof according to Claim 1, **characterized in that** a mechanism (50) for displacing the panel is provided in the region of the central member (18).

3. Vehicle roof according to one of Claims 1 to 2, **characterized in that** the locking arrangement has four locking elements (24, 44), of which two are arranged in a frame part (26) fixed to the roof adjacent to the front end of the roof opening (16), and two are arranged in a frame part (46) fixed to the roof adjacent to the rear end of the roof opening.

4. Vehicle roof according to Claim 3, **characterized in that** the locking elements (24, 44) arranged on one side of the central member (18) are coupled to the drive (32) via a common drive cable (30, 52).

5. Vehicle roof according to Claim 3 or 4, **characterized in that** the locking elements (24, 44) are arranged close to the side edges of the roof area.

6. Vehicle roof according to one of the preceding claims, **characterized in that** the panel (20) can be displaced rearwards over the fixed roof area (14).

7. Vehicle roof according to one of the preceding claims, **characterized in that** the drive has an electric motor (32).

8. Vehicle roof according to one of the preceding claims, **characterized in that** the locking elements (24, 44) and/or the engagement elements (34, 48) are formed in such a way that, when the locking elements and the engagement elements are engaged, a force component that is directed downwards is exerted on the panel (20).

9. Vehicle roof according to Claim 8, **characterized in that** the locking elements (24, 44) and/or the engagement elements (34, 48) have an engagement surface inclined in relation to the direction of movement of the locking elements.

## Revendications

1. Toit de véhicule comportant au moins un capot (20) qui obture, dans sa position fermée, une ouverture (16) pratiquée dans une surface fixe (12, 14) du toit et qui peut être soulevé à l'écart de l'ouverture du toit, pour dégager au moins partiellement ladite ouverture, un dispositif de verrouillage étant prévu pour empêcher un soulèvement du capot dans la position fermée, ledit dispositif de verrouillage présentant une pluralité d'éléments de verrouillage (24, 44) qui peuvent être déplacés entre une position de verrouillage et une position de libération et coopèrent avec des éléments (34, 48) de venue en prise, solidaires du capot, de telle sorte que lesdits éléments de verrouillage emprisonnent au moins partiellement par-derrière lesdits éléments de venue en prise, dans la position de verrouillage, et les libèrent dans la position de libération, les éléments de verrouillage (24, 44) étant guidés à coulissement dans des glissières de guidage (28) solidaires du toit, un entraînement (32), prévu pour déplacer lesdits éléments de verrouillage, étant accouplé auxdits éléments de verrouillage par l'intermédiaire d'un câble d'entraînement (30, 52) rigide à la traction et à la pression, le toit du véhicule étant réalisé sous la forme d'un toit configuré en T dans lequel l'ouverture (16) s'étend entre des régions antérieure (12) et postérieure (14) de la surface fixe dudit toit, sur toute la largeur de ladite surface, et un longeron médian (18), prévu dans une région centrale dans le sens transversal du véhicule, et s'étendant dans le sens longitudinal dudit véhicule, solidarisant les régions antérieure et postérieure de la surface fixe du toit, **caractérisé par le fait que** l'entraînement (32), conçu pour déplacer les éléments de verrouillage (24, 44), est disposé dans la région du longeron médian (18) ; et **par le fait que** les glissières de guidage (28), affectées auxdits éléments de verrouillage (24, 44), sont agencées dans le sens transversal du véhicule.

2. Toit de véhicule, selon la revendication 1, **caractérisé par le fait qu'**un mécanisme (50) est prévu dans la région du longeron médian (18), pour le réglage du capot.

3. Toit de véhicule, selon l'une des revendications 1 à 2, **caractérisé par le fait que** le dispositif de verrouillage compte quatre éléments de verrouillage (24, 44) parmi lesquels deux se trouvent dans une partie d'encadrement (26) faisant corps avec le toit, au voisinage du bord antérieur de l'ouverture (16) dudit toit, et deux se trouvent dans une partie d'encadrement (46) faisant corps avec ledit toit, au voisinage du bord postérieur de ladite ouverture du toit.

4. Toit de véhicule, selon la revendication 3, **caractérisé par le fait que** les éléments de verrouillage (24, 44), situés sur un côté du longeron médian (18), sont accouplés à l'entraînement (32) par l'intermédiaire d'un câble d'entraînement (30, 52) commun.

5. Toit de véhicule, selon la revendication 3 ou 4, **caractérisé par le fait que** les éléments de verrouillage (24, 44) sont disposés à proximité des bords latéraux de la surface dudit toit.

6. Toit de véhicule, selon l'une des revendications précédentes, **caractérisé par le fait que** le capot (20) peut coulisser vers l'arrière au-dessus de la surface fixe (14) dudit toit.

7. Toit de véhicule, selon l'une des revendications précédentes, **caractérisé par le fait que** l'entraînement présente un moteur électrique (32).

8. Toit de véhicule, selon l'une des revendications précédentes, **caractérisé par le fait que** les éléments de verrouillage (24, 44) et/ou les éléments (34, 48) de venue en prise sont réalisés de telle sorte qu'une composante de force, dirigée vers le bas, agisse sur le capot (20) lors d'une venue en prise desdits éléments de verrouillage et desdits éléments de venue en prise.

9. Toit de véhicule, selon la revendication 8, **caractérisé par le fait que** les éléments de verrouillage (24, 44), et/ou les éléments (34, 48) de venue en prise, possèdent une surface de venue en prise inclinée par rapport à la direction du mouvement desdits éléments de verrouillage.
